# EUROPEAN PATENT APPLICATION

(11) **EP 1 229 677 A2**
(43) Date of publication of application: **07.08.2002**
(21) Application number: 01129220.8
(22) Date of filing: 10.12.2001
(51) Int. Cl.: H04J 3/14

(54) **Failover apparatus and method for an asynchronous data communication network**

(30) Priority: 11.12.2000 US 735264; 11.12.2000 US 325789
(71) Applicant: Alcatel USA, Inc., Plano, Texas 75075 (US)
(72) Inventor: Barnard, Jeff, Santa Rosa, CA 95403 (US); Anand, Venkataraman, Rohnert Park, CA 94928 (US); Boulos, Hanna, Rohnert Park, CA 94928 (US); Murugan, Sundara, Rohnert Park, CA 94928 (US); Nattkemper, Dieter, Raleigh, North Carolina 27615 (US)
(74) Representative: Dreiss, Fuhlendorf, Steimle & Becker

(57) **Abstract**

The present invention relates to an apparatus and a method for providing failover operation of a communication link in a data communications network. In one embodiment the invention comprises a method for providing failover protection in a bidirectional data communication network, comprising the steps of: sending data from the first device to a second device, together with a first source identifier; detecting the source identifier of all data received by the first device; and, determining when either the source identifier of data received by the first device equals the source identifier of data sent by the first device or when the source identifier of data received by the first device does not equal a preset value, that a failure has occurred in a first communications link and in response to the failure deactivating the first communications link, and activating a second communications link.

## Description

### Field of the Invention

The present invention relates generally to an apparatus and a method for providing failover operation of a communication link in a data communications network.

### Background

The telecommunications industry has developed systems for transmission and reception of digital data signals organized in a plurality of temporal frames, such as Synchronous Optical Network (SONET) frames. The SONET is an industry-standard optical network that is used for the transmission of various types of communication signals, such as telephony and video signals. The SONET frames are organized in a plurality of superframes, each superframe having a duration of 1 ms and consists of 8 frames each having a duration of 125 µs. Digital data originating from a plurality of channels may be multiplexed by using the technique of time division multiplexing (TDM) and formatted into a plurality of asynchronous transfer mode (ATM) cells for transmission over a SONET physical layer interface. A SONET frame may consist of a plurality of ATM cells. SONET is described in Telecordia SONET Specification Generic Requirements document GR-253; December 1995, REV01 - Dec 1997, REV02 - Jan 1999; Telecordia Technologies, Inc., Morristown, NJ 07960, USA, incorporated by reference herein.

Commonly, the ATM cells are transmitted over a SONET link, via optical fibre, between two matched physical devices. As used herein, the optical fiber is considered a transmission "medium", i.e. a physical conduit for the transmission of data. The terms "communication link" and "link" are used to describe a higher level concept, and do not require any one type of transmission medium. A single link may comprise many different types of transmission medium, and may include several steps, pathways, or intermediate components. ATM cells are transmitted over a SONET link in a number of different types of systems, one example of which is a Litespan system, made by Alcatel USA, Plano, TX. A Litespan system may include a Broadband Fiber Bank (BFB) and a Broadband Remote Transceiver (BRX), which in tum includes a number of Broadband Multiplex Units (BMU). Failure of the optical fiber will cause a break in communications between the BFB and the BMU (hence the BRX). Such breaks may result in substantial downtime and can be very costly to the owner. Therefore, redundant devices, and redundant optical fibers, are often used to negate the problems associated with a single optical fiber failure.

The process of detecting a failure in the active communication medium, and switching over to a redundant medium is called "failover" or "protection switching".

Failover is possible only if there is redundancy - *i.e.,* extra fibers and extra devices. Traditionally, this means each link uses four fibers, two for each direction of traffic. Providing this extra, redundant, fiber greatly increases the cost of installing and maintaining the link. One method typically employed to reduce the cost of providing the link (or to increase the bandwidth of the link, which indirectly reduces the cost) is to use the fiber bidirectionally, so only two fibers are required for each link. A problem with this method is that there is no defined way for the device at one end of a bidirectional link to know when the fiber fails, and when to switch over to a redundant fiber/device in a coordinated fashion. Specifically, a transmitting device will not necessarily know about a break in the fiber unless it fails to receive an expected response with some predetermined time period, and even then it may re-try the transmission one or more times before concluding that the link has failed. This process can take a relatively long time, during which considerable amounts of data can be lost, and in the end still does not prove conclusively that the failure was due to a break in the fiber, and not to some other device failure.

The traditional method (as detailed in SONET specification Telecordia GR-253) used to support failover is to use two separate optical fibers for each link, one for each direction of data travel (or four optical fibers, with two for each direction if redundancy is desired). When a line break is detected by a receiving device, through loss of signal, that device notifies the sending device via the fiber running in the opposite direction. However, this system costs substantially more to install than a simple non-failover system, and since it requires two optical fiber cables for each pair of devices, reduces the overall capacity of the fiber network. Therefore, there is a need to provide a failover system and method for use with an asynchronous data network, which eliminates the risk of network downtime due to single line failure and simultaneously makes optimum use of the existing fiber network.

### Summary of the Invention

The invention addresses these needs. The present invention relates to an apparatus and a method for providing failover operation of a communication link in a bidirectional data communications network.

In one embodiment the invention comprises an apparatus for providing failover protection in a bidirectional data communication network, comprising: a first communications device, for receiving data and transmitting data with an identifying signature; a second communications device for receiving data and transmitting data with an identifying signature; a first communications interface for the relay of bidirectional data communication, which is by default active; a second communications interface for the relay of bidirectional data communication, which is by default inactive; logic means within the first communications device for determining the signature of incoming data, thus determining the source of the data, and thus determining that the first communications interface is broken; logic means within the first communications device for setting the first communications interface as inactive and the second communications interface as active, in response to the system determining that the communications link is broken.

In another embodiment the invention comprises a method for providing failover protection in a bidirectional data communication network, comprising: activating a first communications link for transfer of data from a first device to a second device; sending data from the first device to the second device, together with a first source identifier; detecting the source identifier of all data received by the first device; and, determining when the source identifier of data received by the first device equals the source identifier of data sent by the first device, that a failure has occurred in the first communications link and deactivating the first communications link, and activating a second communications link.

In yet another embodiment the invention comprises a method for providing failover protection in a bidirectional data communication network, comprising: activating a first communications link for transfer of data from a first device to a second device; sending data from the first device to the second device, together with a first source identifier; sending data from the second device to the first device, together with a second source identifier; detecting at the first device the source identifier of all data received by the first device; detecting at the second device the source identifier of all data received by the second device; and, determining, either when the source identifier of data received by the first device equals the source identifier of data sent by the first device, or when the source identifier of data received by the second device equals the source identifier of data sent by the second device, that a failure has occurred in the first communications link, and deactivating the first communications link, activating a second communications link.

### Brief Description of the Drawings

**Figure 1** is a block diagram of a SONET ring;
**Figure 2** is a schematic showing the format of a typical SONET frame;
**Figure 3** shows an abstraction layer node for use with the invention;
**Figure 4** shows another abstraction layer node for use with the invention;
**Figure 5** shows the payload envelope of an ATM transmission;
**Figure 6** is a schematic of one embodiment of the invention;
**Figure 7** is an illustration showing the timing of the failover protection system;
**Figure 8** illustrates the layout of the K1 and K2 bytes and their usage;
**Figure 9** illustrates which portions of the K1 and K2 bytes are used by the BMUs;
**Figure 10** is a flowchart illustrating the steps accomplished by the protection switching application;
**Figure 11** is a block diagram showing a typical Litespan / BRX system which incorporates the invention;
**Figure 12** is a flowchart illustrating the steps involved in sending ATM data from the BRX to a BFB;
**Figure 13** is a block diagram showing the BRX hardware architecture;
**Figure 14** is a block diagram showing an embodiment of a SONET communication system in which the failover apparatus according to the present invention may be implemented;
**Figure 15** is a flowchart illustrating an example of a failover method which can be performed by the apparatus according to the present invention; and
**Figure 16** is a flowchart illustrating another example of a failover method which can be performed by the apparatus according to the present invention.

### Detailed Description

The present invention provides a system and a method of allowing failover operation of a communication link between two devices in a data communications network.

### Digital Access Systems

One embodiment of the invention may be used in a Digital Access System. As used herein a Digital Access System is a telecommunication system that carries and/or converts signals between a backbone switching network (for example a digital switch) and a series of individual subscriber locations. Such access systems include the Litespan Access System produced by Alcatel Systems, Inc. A Litespan Access System or simply "Litespan System" comprises a group of Litespan terminal units connected together. The physical connector may be of various media types but is typically a fiberoptic cable. The logical connection may similarly be of various types. Alcatel typically uses a SONET or "SONET-like" connection to provide the connection between the Litespan terminal units. As used herein "SONET-like" defines a protocol which operates substantially similar to SONET, but may depart from the SONET specification in the use of one or more of the cells. In a typical scenario, one Litespan terminal unit is located at a central office (a central office terminal or COT) and communicates directly with the ATM cloud and/or a local digital switch. The COT then communicates via the fiber/SONET link with the remote terminal units (remote terminals or RTs).

Line cards may be installed within the terminals (both the COT and the RT) to increase their functionality. In one embodiment, a Broadband Fiber Bank (BFB) is installed in the COT and connected on the switch side by fiber to the ATM cloud. The BFB produces a plurality of distribution fibers. A Broadband optical network unit (ONU) such as a Broadband Remote Transceiver (BRX) is installed in the RT. The distribution fibers from the BFB connect to the multiplexer side of the BRX using ATM. The distribution side of the BRX then provides narrowband and broadband services over copper to individual subscribers.

In accordance with the present invention, a system and a method is disclosed which provides for failover protection should the communications link between two devices in a data communications network fail. The invention may be used in the specific embodiments described above to provide for failover operation of the link between the central office terminal (COT) and the remote terminal (RT). If the active fiber linking the COT and the RT (or equivalently the BFB and the BRX) is cut or damaged, it acts as a mirror, reflecting upstream traffic back to the BRX, or downstream traffic back to the BFB. This reflected traffic is detected, and appropriate failover measures are undertaken.

The present invention provides an apparatus and a method of providing facility failover protection in any system which uses time multiplexed cells, such as time division multiplexed (TDM) cells in temporal frames such as synchronous optical network (SONET) frames, by assigning one of the time multiplexed cells in the markerframe as a marker cell which includes a plurality of header bytes and payload bytes, and coding the header bytes with header data. The header contains information specific to the device sending the particular frame. The method according to the present invention further allows a receive interface, such as a Quad Optical Line Unit (QOLU) or SONET octal bus in a SONET communication system, to detect the marker cell in each marker frame and extract the identifying information to determine the origin of the incoming cell.

### SONET and ATM

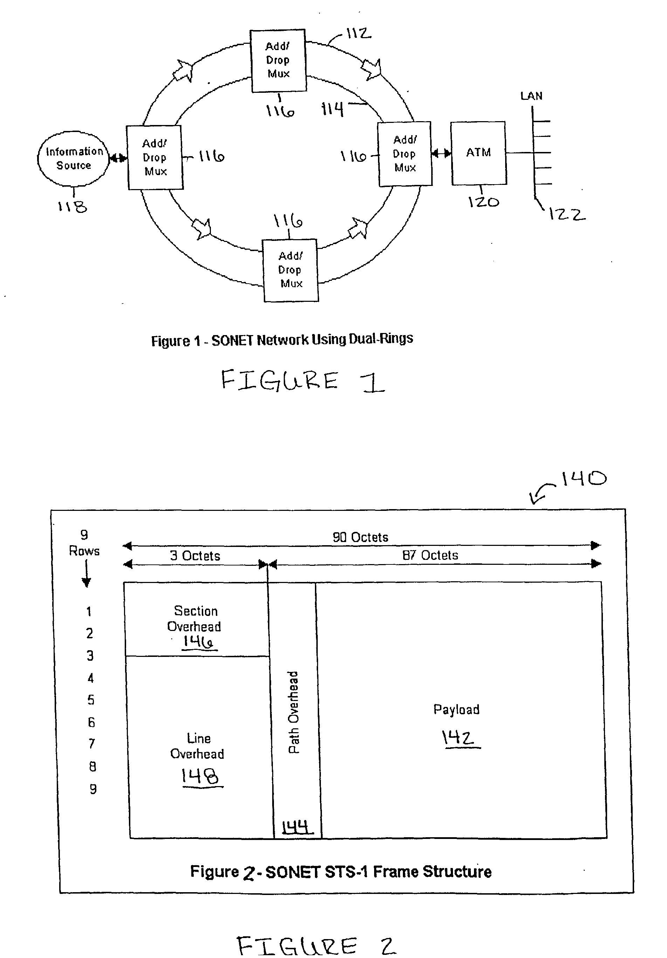

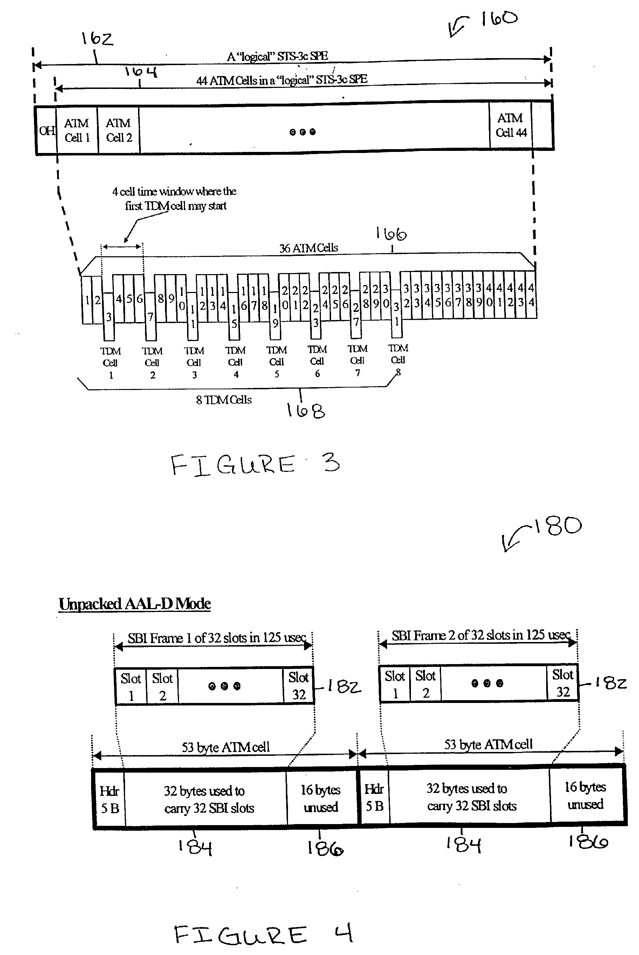

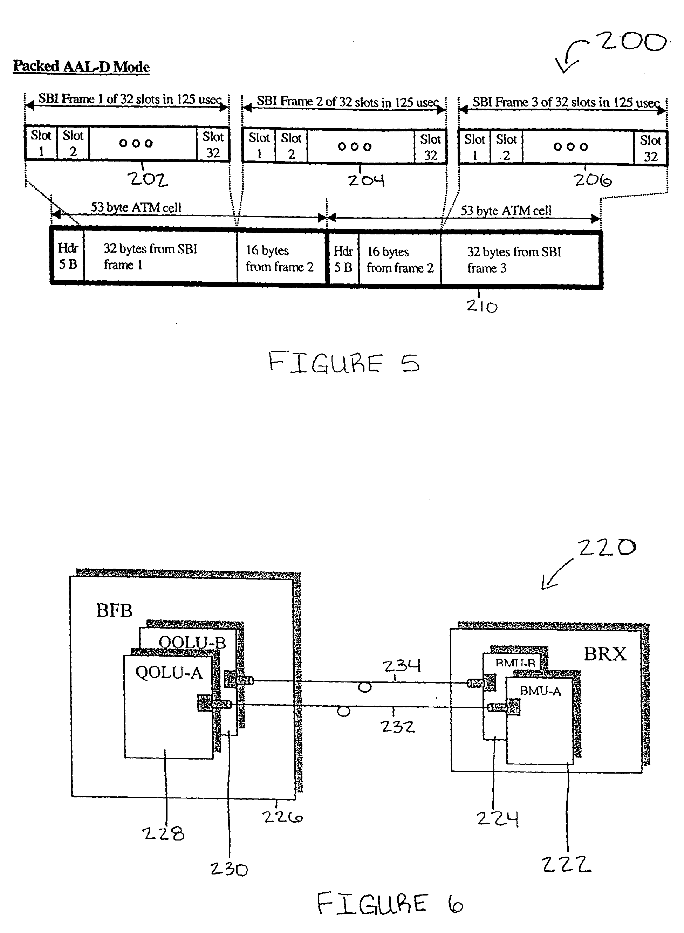

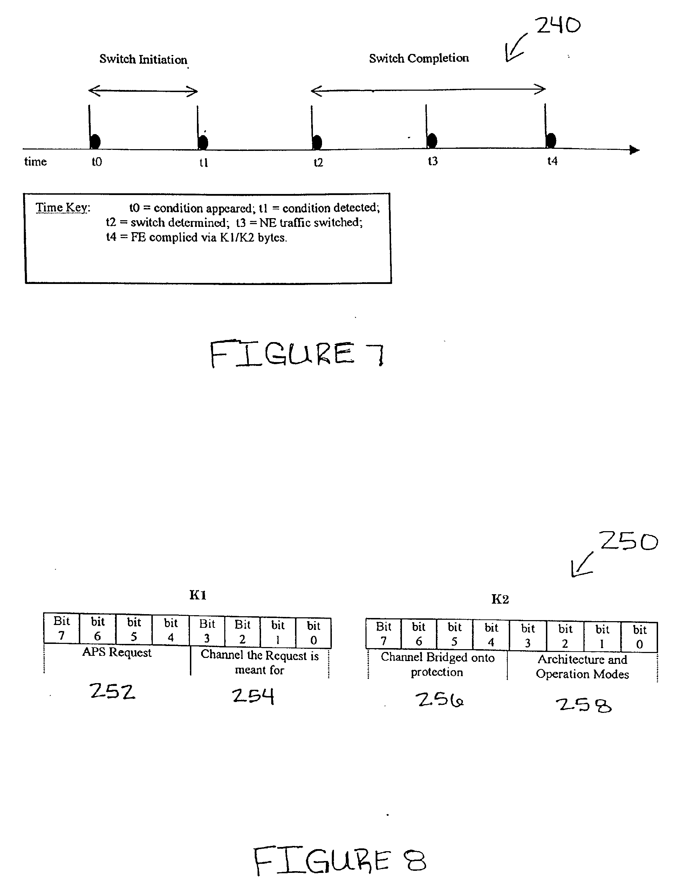

SONET is a standardized physical layer technology used in the telecommunications industry for the transmission of various types of communication signals such as telephone and voice which offers transmission rates in the gigabit per second range, and includes a sophisticated management system. SONET is typically deployed over optical fiber in a dual-ring fashion, as shown in **Figure 1.**

As shown in **Figure 1,** a series of Add/Drop Multiplexers (ADM) 116 allow the insertion of user payload originating from information sources 118, such as an ATM switch 120, into the SONET frames circulating in the ring 112, 114. The dual ring layout provides fault tolerance by switching from the working ring 112 to the alternate ring 114 when a failure occurs.

SONET uses a synchronous transmission scheme, with a standard SONET frame transmitted every 125 µs. Each frame is logically organized as a two dimensional array of bytes. The size of the frame depends on the channel rate. The basic SONET channel is a Synchronous Transport Signal-1 (STS-1) which consists of frames that have 810 bytes organized in 9 rows by 90 columns. At 8,000 frames per second, this gives a channel rate of 51.840 Mbps. A standard STS-1 frame 140, an example of which is shown in **Figure 2**, includes a payload 142, a path overhead 144, a section overhead 146, and a line overhead 148. In order to manage the operation of the channel, additional data must be transferred over the SONET link. This data is transferred in the SONET overhead. The overhead for managing a SONET STS-1 channel and accompanying section equipment consumes 3 of these 90 columns, leaving 87columns for the payload. The payload, otherwise termed the Synchronous Payload Envelope (SPE), includes the path overhead of 1 column. This leaves 86 columns for the user payload, which provides a user data rate of 49.536 Mbps.

Data rates higher than STS-1 are obtained by multiplexing multiple STS-1 signals. For example, three STS-1 signals can be byte-interleaved to form an STS-3 signal that operates at 155.52 Mbps. Another form of multiplexing is to concatenate the overhead and payload bytes of multiple STS-1 signals. For example, an STS-3c frame contains 9 overhead columns (for section and path overhead) and 261 columns for the SPE. The operating rate is the same at 155.52 Mbps. STS-n is an electrical signal which, when modulated over an optical carrier, is referred to as an OC-n optical signal.

Although SONET provides a synchronous frame structure, it does not constrain the user payload to be carried at a specific position within the SONET frame. Instead, it allows the user payload to float within and across SONET frame boundaries, by using special fields in the overhead bytes of the SONET frame to point to the beginning of the user payload.

Asynchronous Transfer Mode (ATM) is a cell-based switching and multiplexing technology designed as a general-purpose, connection-oriented transport mechanism for a wide range of services. Fixed length ATM cells enable extremely fast hardware-based switching. They also provide a fine-grain unit for multiplexing multiple data streams on to a single link. Each stream is called a Virtual Channel Connection (VCC) and is identified by an identifier carried in the header of each cell in the stream. ATM is much more than a link layer technology. It provides a full complement of features associated with network and transport layers such as network-based addressing, routing and flow control. ATM allows multiple data streams to flexibly share the available link bandwidth while providing a pre-determined quality of service to each connection. Different ATM Adaptation Layers (AAL) may be defined to map the user data into ATM cells, to suit particular environments.

ATM can operate over various physical media. The ATM layer generates ATM cells and hands them to the physical (PHY) layer which handles the actual transmission and reception of cells from the physical medium. SONET is just one of the many physical layers defined for ATM. ATM cells are directly and continuously mapped into the SONET payload because an integral number of its 53-byte cells will not fit into a single frame. On reception, the Header Error Check (HEC) field of the ATM cell headers is used to delineate the cells from the SONET payload.

### The SONET Overhead

As described above, the basic element of the SONET standard is the synchronous transport signal level 1 (STS-1), which provides the framing for transmission of control information along with the customer traffic. The STS-1 frame consists of:
- The transport overhead, which carries section and line overhead control information, including parity, trace, alarm signals, orderwire, and data communication channels; and,
- The synchronous payload envelope (SPE), which carries information between the terminals and the SONET network. This information includes both the payload traffic and the path overhead. The path overhead coordinates the activities between the SONET terminals.

These two basic information groups provide the facilities to transport data over the network, and to support operations and management of the SONET network.

When actually transmitted over the fiber, information is presented on a row by row basis, starting at column one of each row and continuing on through the remaining columns until all information has been transmitted. At higher rates of transmission, the number of STS-1 frames transmitted increase. For example, at OC-3 rates, three STS-1 frames (*i.e.,* single STS-3 frame) are transmitted for each 125 µs time period. As the rates increase, so do the number of frames transmitted.

The transport overhead, an example of which is shown in Table 1, and described in detail in Communication Systems Design Magazine, CMP Publications, March 1999 Issue, provides mechanisms to control the section and line interactions over the SONET network. The section interactions provide for the physical link between adjacent peer equipment, such as the transfer of information between a SONET terminal and a regenerator.

Each of the entries shown in Table 1 represents a physical byte (8 bits) of information. In some cases, afield can be used fortwo different purposes. For example, a first case that applies to a single STS-1 frame in the STS-N transport, and a second case that is applied to all other STS-1 frames in the STS-N transmission. In these cases, the field is represented as X/Y , with X representing the first case, and Y referring to the second case.

The section overhead information manages the transport of the optical channel information, and provides the information needed to support the interaction between SONET line termination equipment (LTE's) over that optical channel. The section overhead fields are used as follows:

**Table 1:**

| STS-1 transport overhead. | | | |
|---|---|---|---|
| TRANSPORT OVERHEAD | | | |
| Section Overhead | A1 Framing | A2 Framing | J0/Z0 Trace/grow th |
| " | B1/undefined | E1 Orderwire | F1 User |
| " | D1 Data comm | D2 Data comm | D3 Data comm |
| Line Overhead | H1 Pointer | H2 Pointer | H3 Pointer action |
| " | B2 | K1 APS | K2 APS |
| " | D4 Data comm | D5 Data comm | D6 Data comm |
| " | D7 Data comm | D8 Data comm | D9 Data comm |
| " | D10 Data comm | D11 Data comm | D12 Data comm |
| " | S1/Z1 Sync status/growth | M0, M1/Z2 REI-L/growth | E2 Orderwire |

A1 and A2 delineate the STS-1 frames. For all frames, these fields are represented as having fixed values of A1 at OxF6 and A2 at 0x28.

J0/Z0 is also referred to as the trace/growth field. This field identifies the specific section being carried over the attached fiber, and may be used as a mechanism to positively identify the connection between two adjacent pieces of SONET equipment. The Z0 bytes are reserved to support future growth.

B1 contains parity information used to detect transmission errors. This field is used to monitor the behavior and reliability of the physical channel.

E1 carries local voice orderwire between various section-terminating equipment, and provides a set of services that operators and technicians can coordinate in maintenance activities.

F1, the section user channel, terminates at all section equipment, and can be applied to special applications.

D1, D2 and D3 data communication channel, when combined, provide a single 192-kbps channel to support the overlay communications network operations administration, maintenance, and provisioning traffic.

While the section overhead provides a set of mechanisms to coordinate the point-to-point transmission of information, the line overhead services concentrate on the alignment and delivery of information between terminals. The fields included in the line overhead include:

H1 and H2 STS payload pointer bytes are used to indicate the offset into the STS frame at which the SPE begins. They account for possible differences in the timing of the various interfaces on the network.

H3 pointer action bytes can be used to carry an extra SPE byte, if there is a negative pointer action.

B2 is used for line-error monitoring.

K1 and K2 are automatic protection switch (APS) channels used for applications where line level protection switching is employed. These fields control automatic failover algorithms. There are two general forms of protection switching supported by these fields: linear, in which one line protects one or more working lines, and bidirectional switched rings, in which alternate routes are managed through the ring when a fault occurs. A second important feature provided by the K1 and K2 fields is that of alarm state signaling. These signals can signal that a line defect of some sort has been detected, allowing downstream equipment to suppress alarm reports and aid in alarm correlation and fault isolation.

D4 through D12 line DCC fields support the transmission of OAM&P traffic at an aggregate data rate of 576 kbps, as in the case of the section DCC.

S1 is for synchronization status, contained in the first STS-1 of an STS-N.

Z1 represents growth and is reserved for future use.

M0 STS-1 line remote error indication is intended for only OC-1 rates. This field contains the error count detected by the transmitting line termination equipment (LTE).

M1, STS-N, is for higher rate signals (OC-3). The M1 field, in the third STS-1, in the STS-N, is used to support the Remote Error Indication function.

Z2 is for growth and is reserved.

E2 is for orderwire, and it supports an express voice orderwire between Line Terminal Equipment (LTE).

The SPE contains a combination of path overhead and payload traffic. The first column or path overhead of each SPE is shown in Table 2. The path overhead fields are used as follows:

J1, or path trace, contains a repeating 64-byte message used to verify the distant end of a connection.

B3 contains a parity calculation of the contents of the SPE, regardless of pointer adjustments. This is used to determine if any transmission errors have occurred over the path in question.

C2 path signal label indicates the actual content held within the SPE, including the payload status.

G1 , path status, provides an end-to-end monitoring service that can include an accumulated count of the number of detected errors.

F2, path user channel, is used for user applications between path endpoints.

H4, virtual tributary multiframe indicator, provides control information to describe the structure of the payload traffic.

**Table 2:**

| SPE path overhead column format | |
|---|---|
| | PATH OVERHEAD |
| 1 | Trace J1 |
| 2 | BIP-8 B3 |
| 3 | Signal label C2 |
| 4 | Path status G1 |
| 5 | User channel F2 |
| 6 | Indicator H4 |
| 7 | Growth Z3 |
| 8 | Growth Z4 |
| 9 | Tandem connection Z5 |

### ATM/TDM Cell Packing

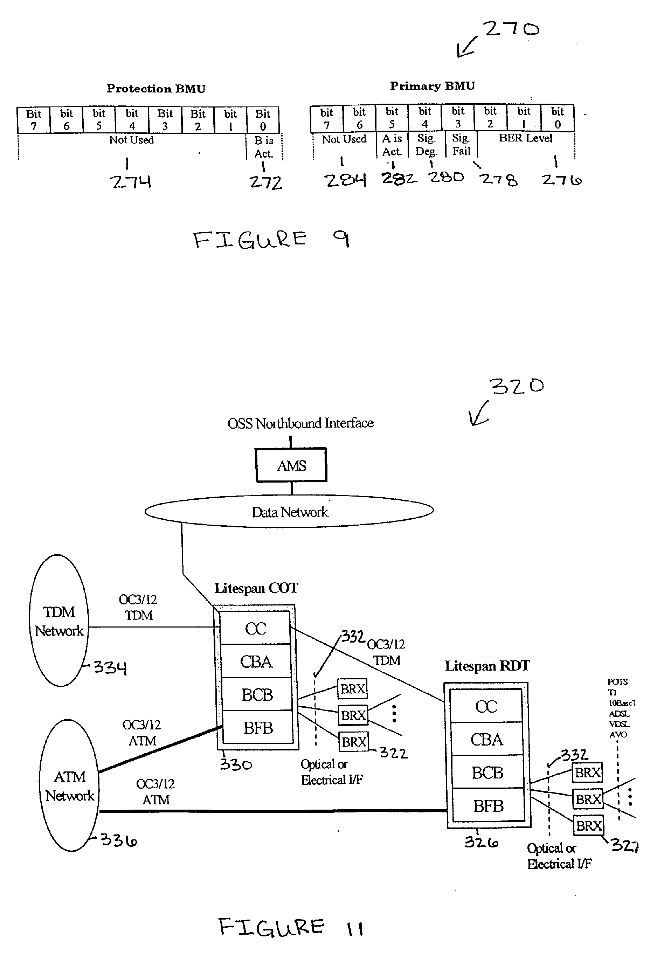

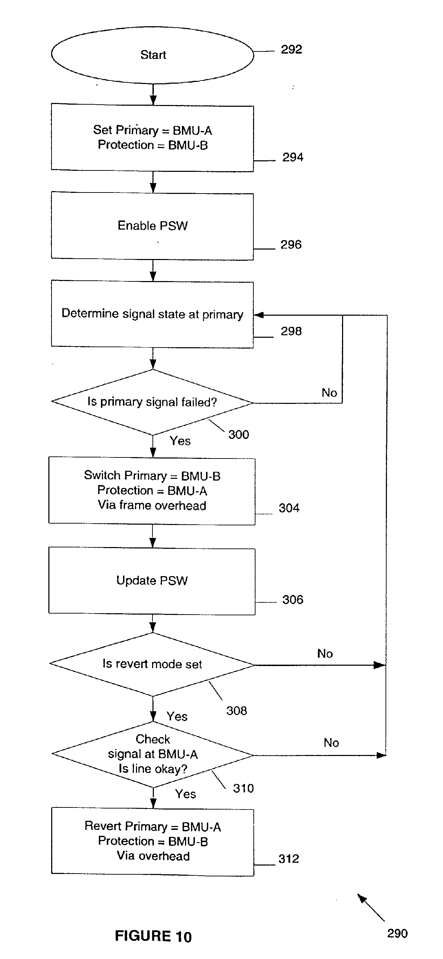

In one embodiment of the invention, an optical OC-3 interface is used to connect the BRX to a Litespan BFB. A standard STS-3c Synchronous Payload Envelope (SPE) of 270 columns and 9 rows is used. Since the STS-3c SPE is allowed to float in the STS frame, the H1 field (in the Line Overhead region) provides a pointer to the first byte (field J1 in the Path Overhead region) of the STS-3c SPE as illustrated in Figure 3. ATM cells can start anywhere in the STS-3c SPE 162 and up to 44 full ATM cells 164 can fit in the SPE. The Header Error Check (HEC) field method is used by the receiver for cell delineation. The STS-3c SPE is packed with two types of cells:
- Regular ATM cells 166 carrying data traffic, simply referred to as ATM cells; and,
- ATM cells carrying TDM SBI data, referred to as TDM cells 168.
   When an SBI frame content is packed into an ATM cell, eight TDM cells are interleaved with ATM at the rate of 1:4, starting from the beginning of the STS-3c SPE frame. In this packing scheme the TDM traffic represents about 20% taxing over the entire STS-3c SPE payload bandwidth. The SBI frame of 32 timeslots is in turn mapped into ATM cells using a proprietary adaptation layer scheme. Two adaptation modes may be used:
- Unpacked AAL-D Mode. The unpacked AAL-D mode is illustrated in **Figure 4**. In this mode each SBI frame of 32 slots 182 is mapped into an ATM cell 184, thus leaving 16 unused bytes in the TDM cells 186.
- Packed AAL-D Mode. The packed AAL-D mode is illustrated in **Figure 5**. In this mode three SBI frames 202, 204, 206, a total of 32X3=96 bytes, are mapped into two consecutive TDM cells 208, 210.

When the TDM traffic is converted in ATM cells using the packed or unpacked AAL-D, the bit rate of octalbus traffic inflates in the OC-3/3 link due to the ATM overhead and the unused bytes in unpacked case.

### Terminal Architecture

In accordance with the invention, a form of SONET protection switching assures optical line integrity between the BRX and Litespan terminal systems through the use of protection equipment. The BRX architecture employs a design in which the optical carrier and common control functionality are housed on the same physical card, the BMU. To provide protection switching, both a primary BMU and a protection BMU are used. **Figure 6** illustrates one embodiment of the invention in which two BMUs are connected to a BFB via independent fibers 232, 234. A first BMU 222 (BMU-A) acts as a primary BMU, while a second BMU 224(BMU-B) acts as a protection BMU. The BFB 226 first attempts to establish communications with the primary BMU upon system startup. In normal operation, neither BMU has protection precedence. In the typical Litespan setup shown in **Figure 6**, the BRX terminates an optical line. No SONET rings are present, and therefore protection switching can only be linear (e.g., point-to-point).

Automatic Protection Switching (APS) increases system integrity and reduces downtime by automatically substituting a protection line for a failed line in a sufficiently short period of time. A failed line is determined based on detecting a set of predetermined failure conditions including, for example, Loss of Signal (LOS), Loss of Frame (LOF), Alarm Indication Signal (AIS), Bit Error Rate (BER), and timing block failure. In one embodiment, the protection BMU is set as the master for protection switching, and determines the switching priority level based on the received APS data from the far-end (FE), local signaling conditions and local equipment status. The APS data itself is carried in the K1 and K2 bytes of the signal overhead. The protection BMU also uses the APS data to inform its protection priority level to the FE.

To increase Synchronous Transport Signal (STS) payload continuity, the BRX can implement a 1+1 architecture. This architecture has the protection optics carrying the same payloads to the FE as the primary optics. At the receiving end, the primary and protection OC-3 signals are monitored independently for failures. The receiving equipment then chooses either the primary or the protection optics as the one from which to select the traffic. An alternative is a 1:1 architecture in which each optical connection may carry different payloads. Usually a 1:1 architecture will use one standby device for each active device.

Bi-directional switching mode is used to simultaneously switch the optical path on both ends (i.e., the BRX and BFB). Switching of only one end is not allowed. Near-end (NE) and FE coordination is accomplished using APS data communications. The BRX can be provisioned in either revertive or non-revertive mode for SONET protection switching. When positioned in revertive mode, the system reverts back to using the primary BMU when the primary BMU detects failure conditions no longer exist. During a line-level protection switch, all STS payload envelopes carried in an OC-3 signal are switched simultaneously. A protection switching software application (PSW) handles this switching to minimize loss of data during the switchover.

### Optical Interface and the APS

The SONET optical interface is the medium for all communications in and out of the BRX system. Such communications includes voice, data, and signaling traffic, along with terminal datalink and SONET overhead data. The datalink data signals the protection switching alarms and provisioning-related messages which define how the BRX should protect the optics. The SONET overhead includes the APS data to communicate with the FE protection switching. PSW-related alarms will be reported and cleared by the BRX. In a specific embodiment, the PSW application reads from and writes to hardware registers of a SONET/ATM Physical Layer Device, which terminates the SONET signal and removes/inserts ATM cells. One example of a register data structure pPm5348Prot1 is defined in Listing 1.

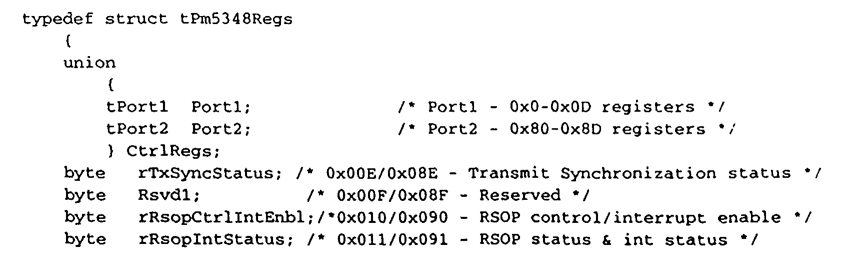

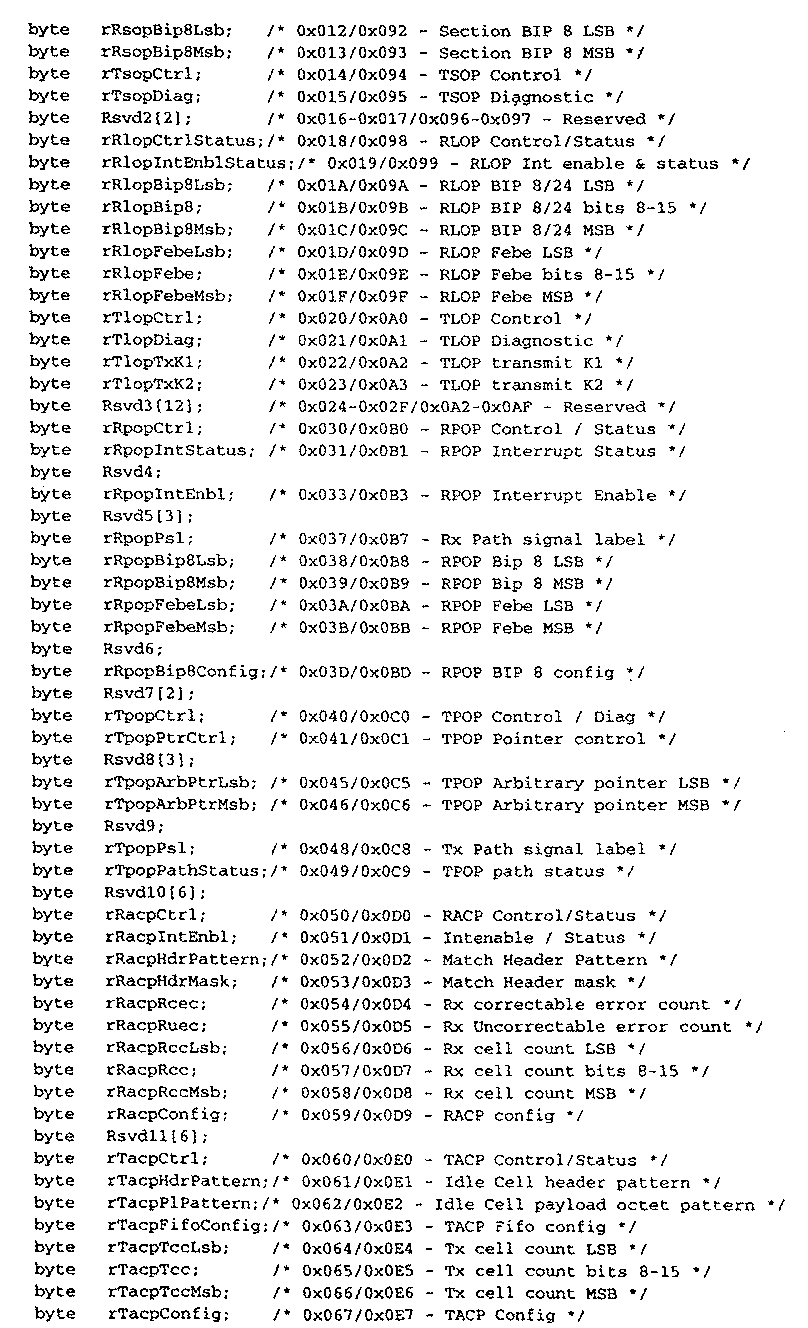

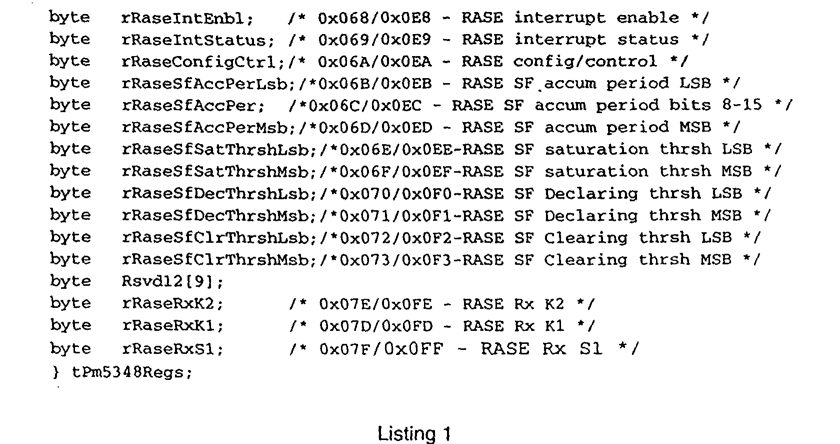

The registers used by the PSW application are described in Table 3. These registers are used by the PSW for line-level defect detection, and for APS data communications. In one embodiment, the PSW communicates using the K1 and K2 bytes of the SONET overhead.

**Table 3**

| PHY Registers | Description |
|---|---|
| rRsopIntStatus | Read for Loss of Signal (LOS), and Loss of Frame (LOF). |
| rRlopCtrlStatus | Read for Alarm Indication Signal (AIS) and Remote Defect Indication (RDI). |
| rTlopTxK1 | Written to change the transmit APS K1 byte. |
| rTlopTxK2 | Written to change the transmit APS K2 byte. |
| rRpopPsl | Read for single-fiber reflection LOS. |
| rTpopPsl | Transmit a pattern for single-fiber reflection LOS. |
| rRaseIntStatus | Read for Protection Switch Byte Failure (PSBF). |
| rRaseRxK1 | Read for the receive APS K1 byte. |
| rRaseRxK2 | Read for the receive APS K2 byte. |

### BMU to BMU Communication

In accordance with one embodiment of the invention, protection switch data is communicated between the Protection and the Primary BMU devices. A Quad Serial Peripheral Interface (QSPI) ping-pong message is used by the primary BMU to send line signal condition and active line indications to the protection BMU. The protection BMU similarly uses the QSPI ping-pong message to send active line indications to the primary BMU. The QSPI ping-pong messages need to be sent often enough for the protection switching application to meet timing requirements. The optical interface between the BMU and the QOLU can be a single optical fiber. If the fiber is disconnected or cut, the signal transmitted by the device at each end is reflected back to that end's receiver. Since under standard SONET formats, signal reflection may be interpreted by each end as a valid signal. The system must discern between APS data and regular SONET data. One method of accomplishing this is to alter the SONET overhead data, and to add an audit on each end to verify that each end is receiving data from the FE or from itself.

### Timing Requirements

Protection switching performance is characterized by the time to detect certain switching thresholds and the time to physically complete the switch. **Figure 7** shows the timing requirements in one embodiment of the invention where t0-t1 reflects the time for switch initiation, and t2-t4 reflects the time for switch completion. Each time event t0-t4 represents a variable point in time during the switching process. The BRX protection switching design goals for these times are based on the GR-253 SONET Specification Switch Initiation and Completion Criteria section specifications. For signal and equipment failures (i.e., LOS, LOF, AIS, and timing block failure), these times are no more than 10ms and 50ms, respectively. For bit error rate (BER)-based signal failures and degrades (i.e., BER-SF and BER-SD), switch completion is also no more than 50ms, but switch initiation is based on the provisioned BER levels that are defined in the SONET specifications.

### Failure Strategies

Together with handling the protecting optics for signal failures (i.e., LOS, LOF, AIS, BER-SF, and BER-SD), the PSW application may be also used to protect timing block failures. The criteria for timing block failure includes loss of timing synchronization with the SONET signal and loss of communications between the timing block for example a Motorola 68HC11 chip or equivalent, and the timing block controller in the main processor for example a Motorola 68331 chip.

The SONET overhead includes data that is directly used by the PSW application, including the K1/K2 bytes and the C2 byte. The K1 and K2 bytes of the first STS-1 in the OC-3c signals line overhead are used to provide a 128 Kbps datalink for PSW coordination with the FE. **Figure 8** shows the bit-fields of both the K1 and K2 bytes.

The K1 APS Request field 252 (bits 7-4) contains the request types that can be used for protection switching control, details of which can be found in GR-SONET Specification. Table 4 lists the requests used in the PSW, from highest to lowest priority.

**Table 4**

| Bit Pattern | APS Request |
|---|---|
| 1100 | Signal Failure (SF) - Problem detected in the signal received by the NE which disrupts service. |
| 1010 | Signal Degrade (SD) - Same as SF, but less impact on service. |
| 0110 | Wait to Restore (WTR) When operation is revertive mode, provides hysteresis for return from protection to service. Prevents oscillations of the protection selector. |
| 0010 | Reverse Request (RR) Acknowledgment of an APS request. It takes on the priority of the request it is acknowledging. |
| 0001 | Do Not Revert (DNR) - Code sent after a failure has cleared, but the protection switch configuration is non-revertive mode. |
| 0000 | No Request (NR) - Normal operation request value. |

The K1 Channel number 254 (bits 3-0) informs the FE receiver of the channel for the APS protection switch request. The field size is defined to allow 1:n (i.e., one protection unit for n service units) to use APS switching. In the BRX, there is one protection BMU for each primary BMU, thus the channel number will only have the values 0 for the primary BMU or 1 for the protection BMU.

The K2 Channel number 256 (bits 7-4) reflects the unit that is currently switched to protection. To prevent channel mismatch, the K2 channel number should always correlate with the channel number in the K1 byte within 50ms of a switch request.

The K2 Architecture and Operation Modes 258 (bits 3-0) define whetherthe configuration of the network element is for 1+1 or 1:1 protection switching and whether that switching is uni-directional or bi-directional. The default bit pattern for 1+1, bi-directional switching is 0101. The default bit pattern for 1:1, bi-directional switching is 1101. By default, the PSW application sends the 1+1, bi-directional pattern, even though the PSW may be operating in 1:1, bi-directional switching. This is done to simplify the handshaking with the QOLU without needing to modify existing QOLU and TL-1 management software would handle this BRX-unique scenario. An exception to these default settings exists when the optics need to declare RDI, where the bit pattern would be set to 0110. This field should always correlate with the same field in the received K2 byte, within a 100ms time period. Any mismatch in these bytes between the receiver and the transmitter would represent a mode mismatch (MM) in the provisioning of the NE and FE.

According to the SONET Specification, GR-253, the C2 byte of the first STS-1 payload envelope in the OC-3 signal is used to provide the payload mapping status. For the BRX, the status value is 0x13 for ATM mapping. In accordance with one embodiment of the invention, this byte is altered to indicate whether the BRX is in a LOS situation due to single-fiber reflection. The BRX is set to expect to receive a prespecified byte value of 0x93 (for single fiber) or 0x13 (for dual fiber) from the FE in the C2 byte position. If the BRX receives any other value, a LOS condition will be declared. Likewise to assist the FE in the same determination, the BRX transmits a byte value of 0x53 to the FE in the C2 byte. Particularly, if a line failure occurs due to a break in the optical fiber the BRX will receive packets having a byte value of 0x53 in the C2 byte - the same value as the packets it sends, so it will detect the line failure. Similarly, the QOLU will receive packets having a C2 byte value of 0x93 or 0x13 - the same value it sends, so it too will detect the line failure.

The PSW application can be considered to operate as a state machine, wherein transitions between the various states are based on a set of criteria. These criteria includes NE protection mode, NE revert state, FE APS data, NE protection BMU condition status, and NE primary BMU condition status. The states, stimuli, and resulting transitions are shown in Table 6.

The Primary state is that state in which the primary BMU is selected to receive traffic (i.e., Primary BMU, or BMU-A is set as active). A transition to the Protection state includes the process of switching traffic to the protection BMU (i.e., making the Protection BMU, or BMU-B active). A Wait To Restore state is included, which employs a timer to prevent rapidly repeating (and perhaps erroneous or unnecessary) traffic switches.

### Condition Priority

The condition priorities determine the state transitions described above, and are defined in Listing 2, where the value is proportional to the priority. The unused conditions are checked in the code for signal validation.

**Table 5**

| States/ Stimuli | Protection | Primary | Wait To Restore |
|---|---|---|---|
| Higher priority condition on Primary BMU | no action | switch to Protection | switch to Protection |
| Condition clears on Primary BMU | if revertive, Wait To Restore; else, no action | no action | n/a |
| Wait To Restore timeout (if revertive) | n/a | n/a | switch to Primary |
| Higher priority condition on Protection BMU | switch to Primary | no action | switch to Primary |

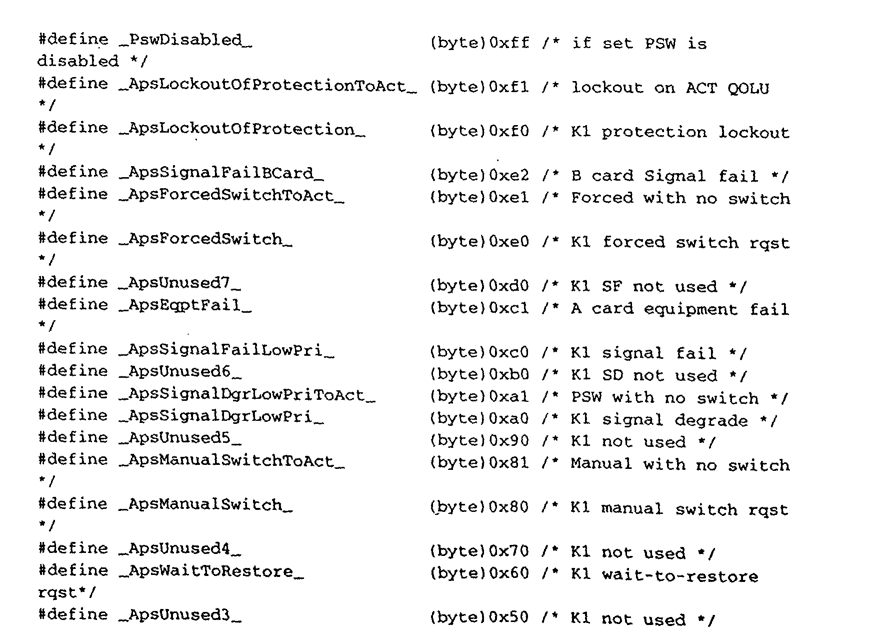

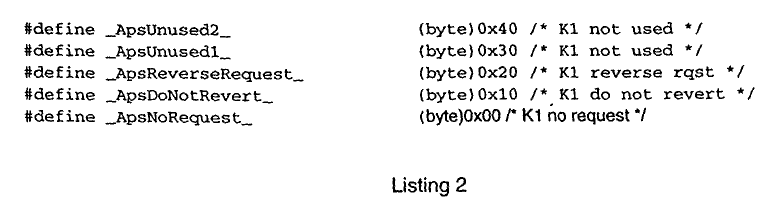

### PSW Database

The PSW uses a locally controlled database or memory to record and track protection switching information. One embodiment of a database used as an interface between the interrupt routine and the base-level code is the IsrToBase structure, defined in Listing 3.

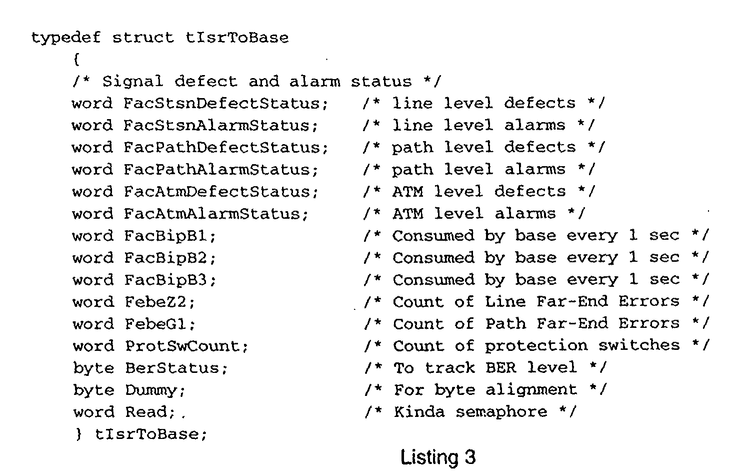

An example of the database PSW is defined below, and includes some parameters (e.g., manual commands) that the QOLU may use.

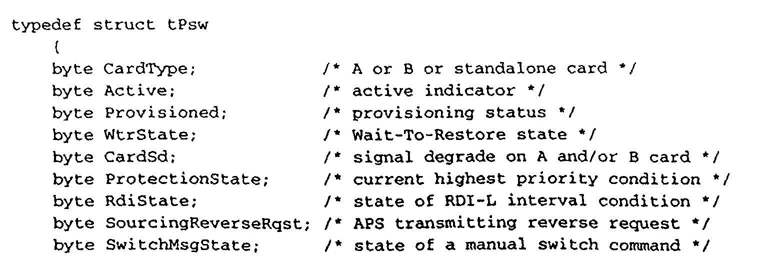

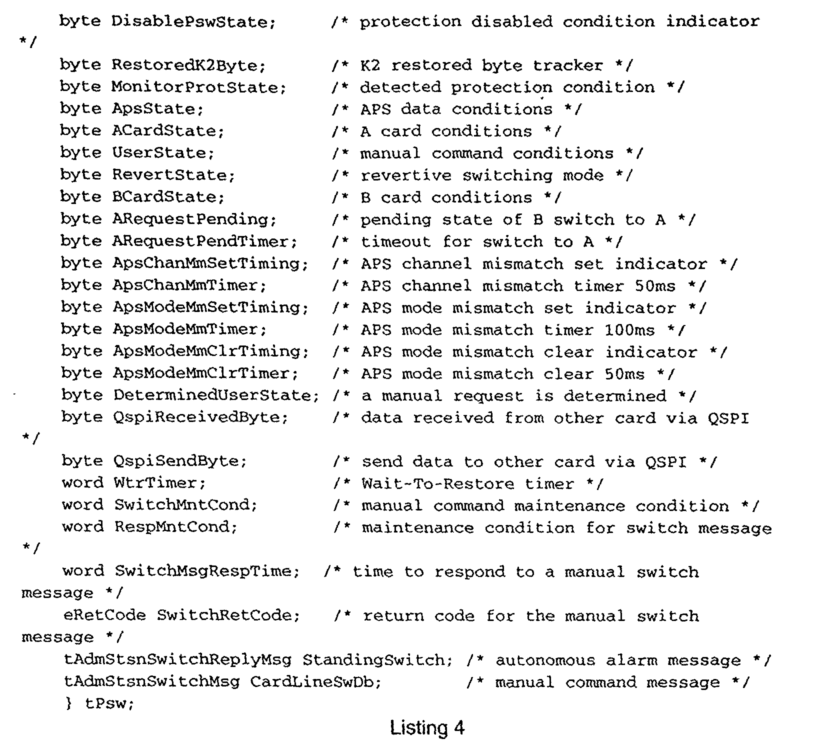

### PSW Redundancy Communications

The PSW functionality of each BMU (primary or protection) card communicates with the same functionality in the paired BMU card. The formats used for the Psw.QspiReceivedByte and the Psw.QspiSendByte are based on whether the primary or the protection BMU is sending the data. **Figure 9** shows the bit-fields of each format. As shown therein, the protection BMU only sends active line indications 272 (bit 0) to the primary BMU. The primary BMU sends active line indications 282 (bit 5), signal degrade 280 (bit 4), signal fail 278 (bit 3), and BER level 276 (bits 2-0) to the protection BMU. The BER level value is 0 for no BER and ranges in value from 1 for 10E-10 to 7 for 10E-4 (10E-3 is always a signal fail). Other bits can be used for reporting additional information, for example indicating which BMU is active. For proper timing, the primary BMU's active indication is designed to match the protection BMU's active indication within a 10ms time period.

### Peripheral Equipment Interface

A Peripheral Equipment interface can be used to provision the BRX. The provisioning messages and storage structures include those shown in Listing 5.

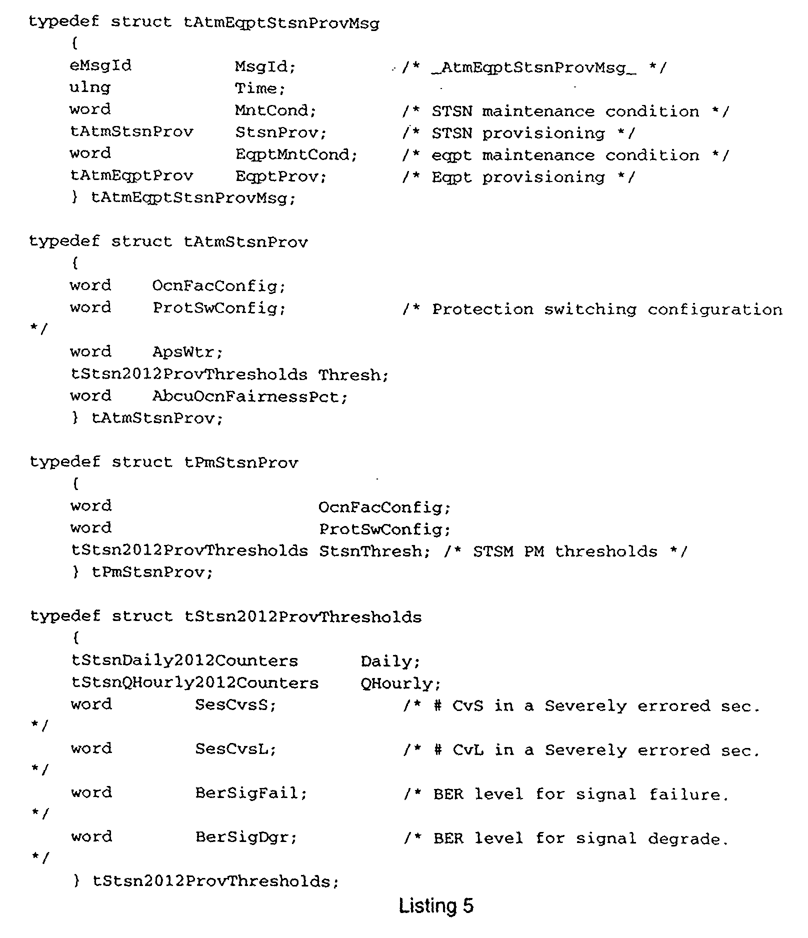

In one embodiment, upon receiving an _AtmEqptStsnProvMsg_signal from the Timeslot/Communications Arbitration Task (TCAT), a Universal Network Interface (UNI) user network interface application calls ProcessEqptStsnProvisioningMsg() function, whose actions are shown in the pseudo-code Listing 5:

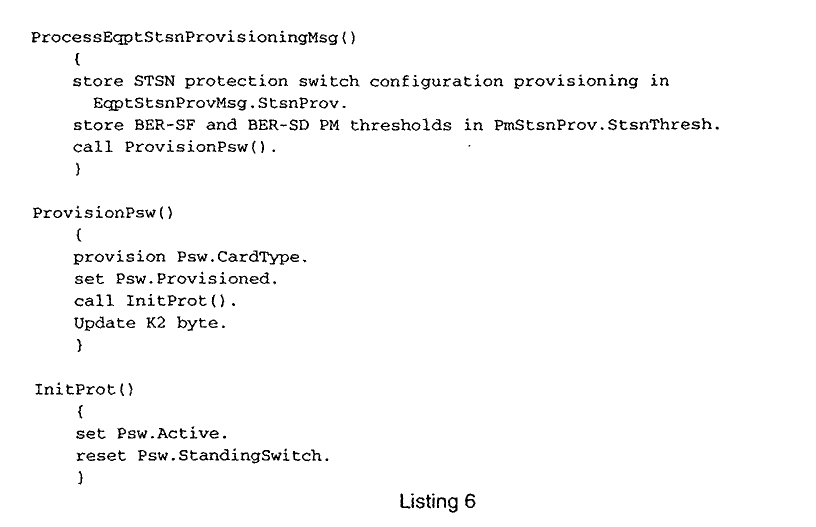

### UNI Task

The user network interface (UNI) is responsible for OC-3 SONET termination along with performance monitoring. In one embodiment, the PSW functions are incorporated into the UNI application. The UNI includes a one-millisecond interrupt routine called OneMslsr(). This routine handles performance monitoring and alarm integration, including checking for the line conditions LOS, LOF, AIS, RDI, and BER (with all but BER recorded in IsrToBase.FacStsnDefectStatus). A call to PswServiceRoutine(), detailed in the pseudo-code of Listing 7, may be used to call the PSW:

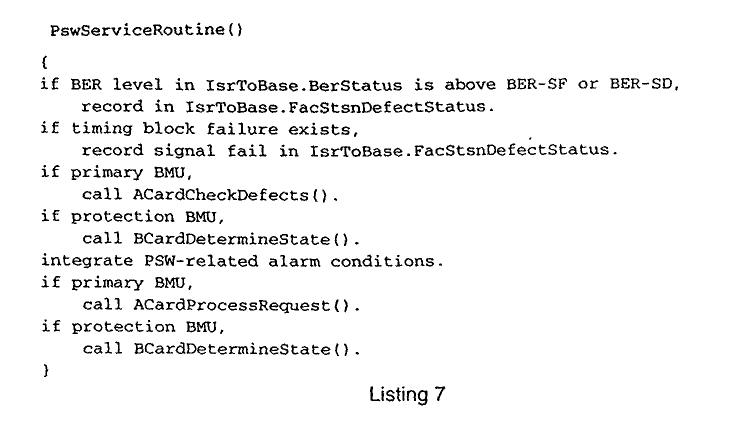

At this point the PswServiceRoutine() returns to the interrupt routine, which in turn relinquishes the kernel for other tasks. Most PSW operations involve checking for line and equipment conditions or defects, determining the highest priority condition, and processing switch requests. Line and equipment conditions are checked on the primary BMU by an ACardCheckDefects() function, shown in Listing 8:

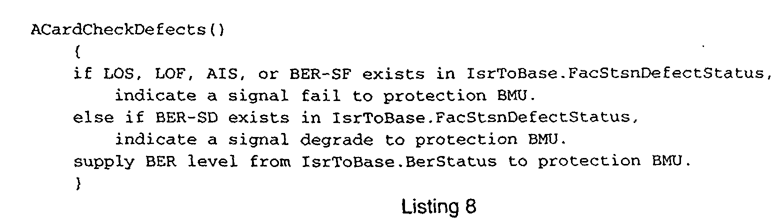

The BCardDetermineState() function gets the highest priority condition from the protection BMU's perspective, by storing and comparing the results of several functions as shown in the pseudocode of Listing 9: 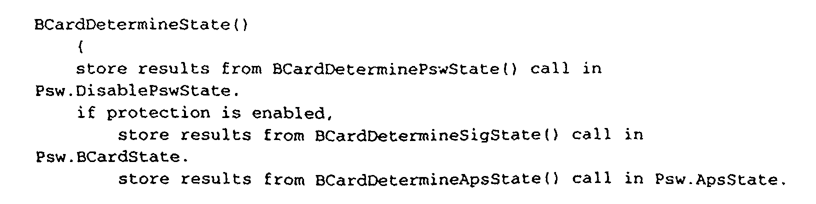 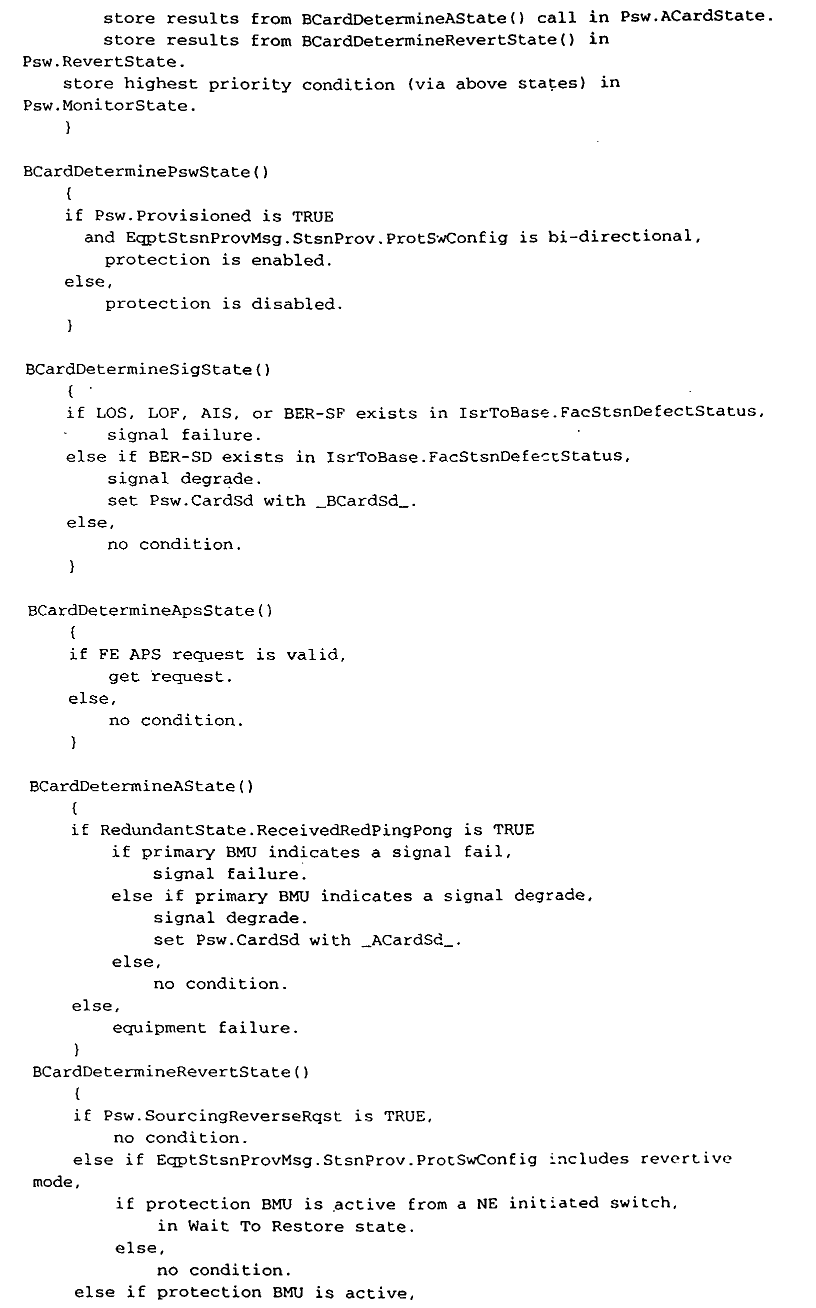 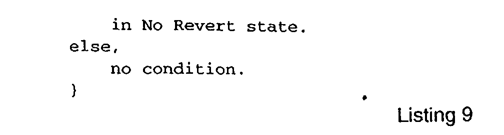 Primary BMU protection switching is coordinated by AcardProcessRequest() and the BcardProcessRequest () as shown in Listing 10.

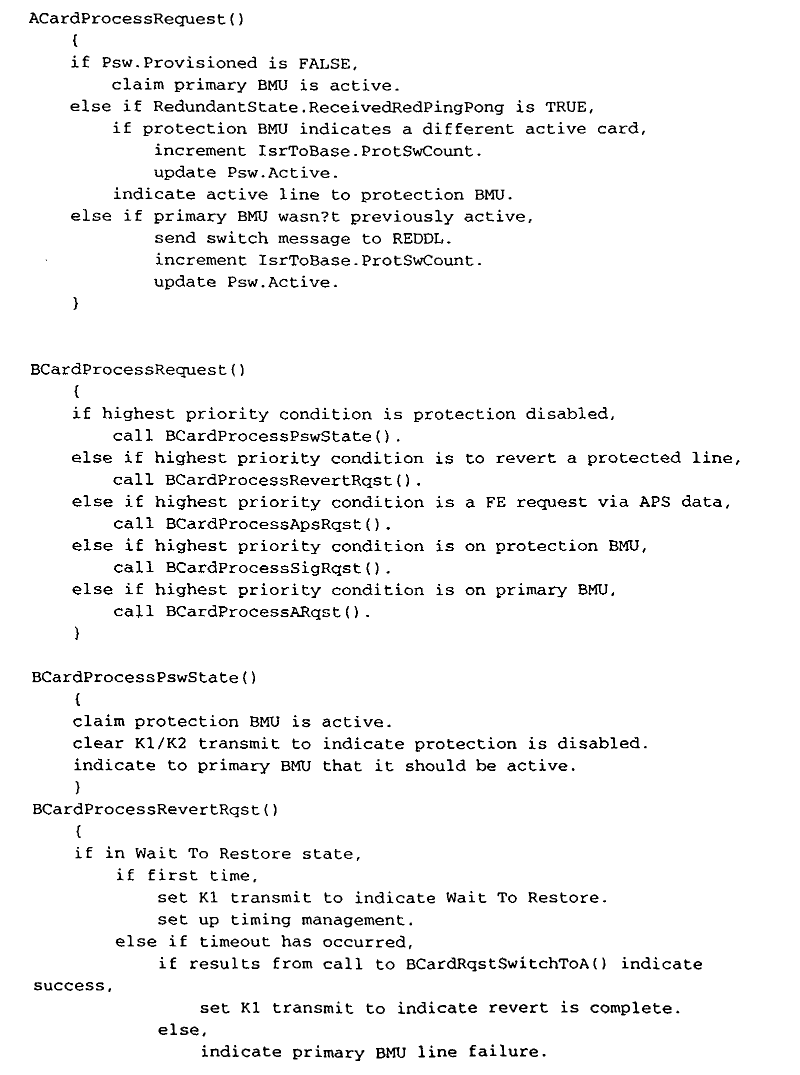

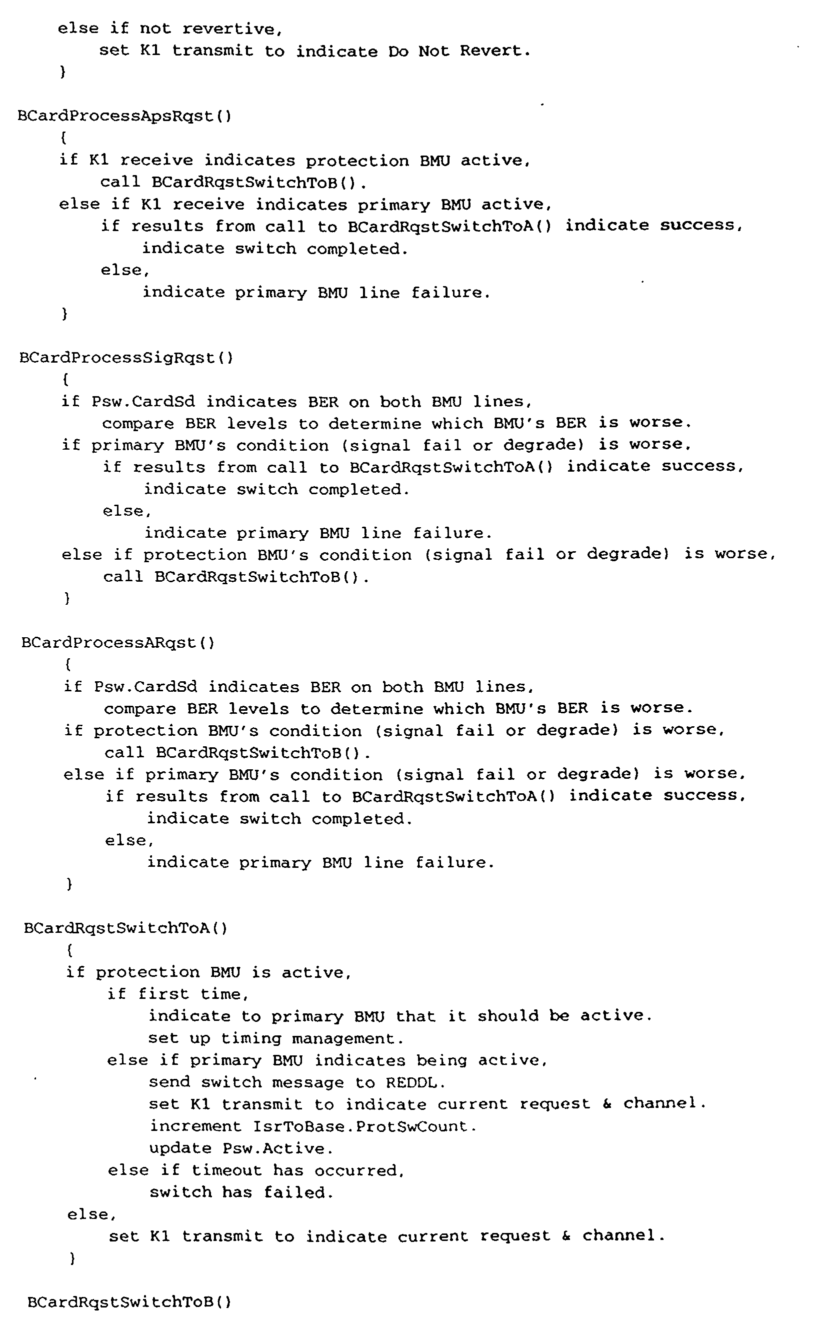

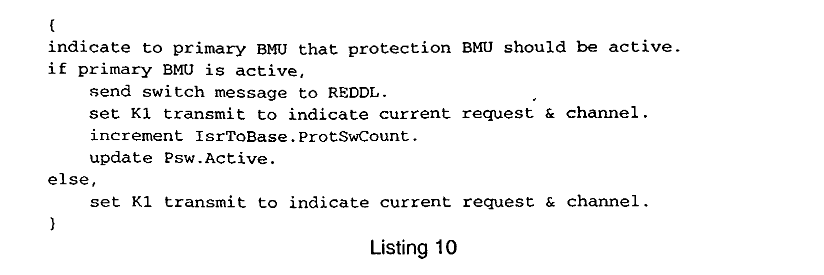

**Figure 10** illustrates the process described in Listing 10. As shown in **Figure 10,** following an initialization step, the primary BMU is set to BMU-A, with the protection BMU set to BMU-B. The PSW application is started. While it functions as a state machine the PSW continousouly checks the signal status of the primary line. When a line failure is detected two alternatives exist, the process will either wait to see if the signal is restored, or the process will initiate a switchover, setting the primary BMU to BMU-B, and the protection BMU to BMU-A. This switchover is effected by the PSW application using the overhead bytes, specifically the K1 byte, of the SONET packet. This PSW database is then updated to reflect the switchover. Depending on whether a revert/no-revert flag is set, the PSW may at a later stage revert to the original Primary = BMU-A, Protection = BMU-B configuration if it detects the line connected to BMU-A has been fixed, or is no longer in a fail mode.

### Redundant Datalink Interface

As described above, a QSPI ping-pong message is used to communicate between the BMU's. The QSPI ping-pong message tBptPingPongMsg function uses a PswByte for PSW coordination between the primary BMU and protection BMU. The REDDL gets the transmit information from Psw.QspiSendByte, and stores the receive information it gets in Psw.QspiReceivedByte. The PSW ascertains whether the other BMU is alive by reading the ping-pong validity indication in REDDL's RedundantState.ReceivedRedPingPong structure, which in one embodiment is based on whether or not a specified time period, for example10ms, has elapsed since the last indication change.

Because of PSW dependency with REDDL, the optical and processor switching needs to occur closely together. If the messaging is quick enough *i.e.,* calls and data are not lost, the protection BMU's PSW may send a _BmuStateTransitionMsg_to both the active and standby REDDL whenever there is a need to switch the active BMU, i.e. that BMU which is currently receiving voice, data, and signaling traffic. Other forms of communication between the BMU PSW's and between the PSW's and the REDDL can be used while remaining within the spirit and scope of the invention.

The PSW may determine whether there is a timing block failure by reading the indications from the timing block controller's TBOutOfSync and TBCommunicationFailure. PSW declares the BMU to have a signal fail condition whenever either of these indications exist, and uses the condition as it normally would in protection switching decisions.

### Alarm Handling

The PSW-related alarm conditions are checked in a PswServiceRoutine() function. These include PSBF, APS Channel Mismatch (CM), APS Mode Mismatch (MM), and Protection Line Signal Failure Defect (PLD). These alarms are then integrated by a call to an ApsAlarmlntegration() routine.

### Litespan Implementation

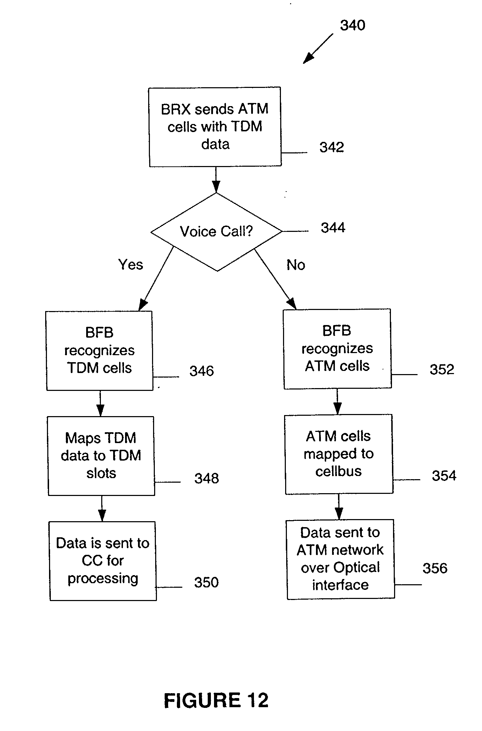

The following sections detail how one embodiment of the invention may be installed in the field using a Litespan system. **Figure 11** shows a typical Litespan / BRX system 320 for use with the invention. The BRX shown is a remote access extension of the Litespan system operating over an optical or electrical interface.

The BRX 322 is subtended to a Litespan terminal 326 that provides management, control, and switching functions. In this respect the BRX can be viewed as a remote channel bank with narrowband, wideband, and broadband capabilities. From a technology point of view, the BRX is a broadband unit that supports narrowband services. The BRX connects to a Litespan Terminal in the Central Office (COT) 330 or to a remote Litespan terminal over optical or electrical interfaces 332. Voice, video and data traffic is transported between the BRX and the Litespan terminal. Standard ATM cell payload is used, at the datalink layer, between the BRX and the subtending bank for TDM 334 as well as ATM 336 traffic. A non-standard ATM Adaptation Layer (AAL) scheme is used to carry TDM traffic within the ATM payload. In this configuration, the BRX is subtended by a BFB over an OC3 optical interface.

In the upstream direction, the following takes place, as illustrated further in **Figure 12**. The BRX sends ATM cells containing the Broadband ATM traffic and the TDM traffic packaged in special ATM cells that are called TDM cells. This function is handled by the abstraction layer. When the BFB receives upstream data the following takes place:.
- For voice processing, the BFB recognizes the TDM cells by a special pattern in the ATM cell header, terminates the AAL-D sub-layer extracting the TDM data, and maps the TDM data over the octalbus as TDM slots. The ATM Fiber Bank Interface combines the Octalbuses in addition to information received via a serial bus interface of the optical line units, i.e. TDM and control traffic, from all cards, and sends them over the time slot interchange cables to the CC for processing.
- For data/video processing, the BFB terminates the OC3 physical layer and passes the ATM cells to a different physical layer, which is the cellbus. The cell relay unit terminates the ATM layer, which includes cell buffering, cell header translation, and cell switching functions. The cell relay unit sends the ATM cells to the transport cards, which send the data to the ATM network over OC3 optical interfaces.

In the downstream direction the reverse operation takes place. BRX Unit Hardware Architecture

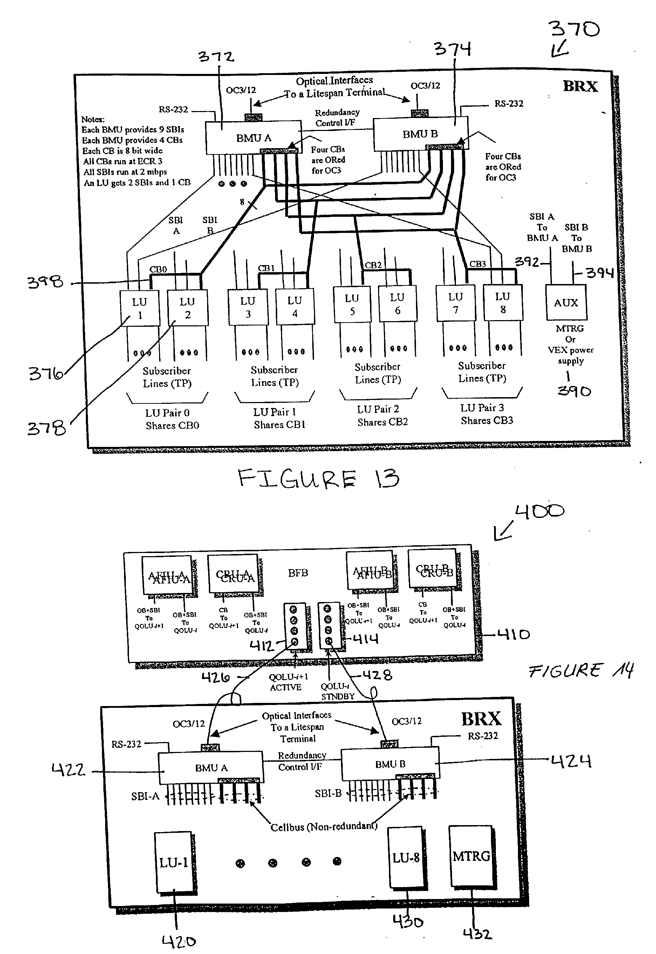

**Figure 13** show the architecture of a typical BRX unit. In addition to the powersupply, backplane, and fan, the BRX unit provides eleven slots that can house many board types, including the following:
- BMU 372, 374: the BRX Controller (two BMU per BRX for facility protection)
- LU 376, 378: Service Line Unit
- MTRG 390: Maintenance and Ring Generation line unit
- The interconnection between these board and the BMU is carried out mainly over two types of buses:
- SBI 392, 394: a point-to-point 1-bit bus between a line unit and each BMU for carrying the TDM traffic and the data-link messages from the Litespan common control.
- Cellbus 398: an 8-bit bus shared by the two BMU's; only the active BMU uses, to carry the ATM traffic to the line units. Each BRX has four buses, and every two line units shares one bus.

### Broadband Multiplex Unit (BMU)

The BMU is responsible for communicating with the Litespan terminal over an OC3 interface (for optical feed, or similarly over HDSL line unit interface for electrical feed) to acquire provisioning and operational information. The BMU can be configured to use either of these two network feed media.

The BMU supports point-to-point serial links over the serial bus interface bus with every line unit. Narrowband line units such as those that provide POTS, ISDN , and T1 service use the SBI. The BMU multiplexes traffic received from subscribers via the SBI and forwards it to the Litespan. The BMU also supports the cellbus for ATM-based data traffic.

The BRX supports facility protection, which can be of various means including optical and electrical. In accordance with one embodiment of the invention this protection is achieved by redundant BMU's, i.e. two BMU's (BMU-A, the primary and initially active unit, and BMU-B, the protection or standby unit). This configuration provides redundant control and optical interface with a Litespan terminal having the following configuration:

Every LU has two serial point-to-point SBI buses with BMU-A and BMU-B.

Two BMUs may share one cellbus, which is shared by all the LUs. The standby BMU tri-states its cellbus drivers.

One BMU will be in active state while the other is in a standby state.

A redundancy control interface allows the two BMUs to communicate.

On the downstream direction, the two BMU's receive the same SONET signal from the two OLU's (HDLU's) that they are connected to.

### Failover Operation

As described above, the BRX requires a Litespan to connect to the ATM/TDM network, and this connection is of the point to point variety via an OC-3 link. The facility protection is thus linear. In this case, there two possible ways to realize the protection, 1+1 and 1:1.

The invention utilizes an embodiment of a failover system 400 as shown in **Figure 14.** 1:1 facility protection is a special case of 1:n protection, which is defined that there is only one standby facility/system to protect one out of n facilities/systems upon failure. Therefore, the standby does not have to carry identical SONET payload during normal operation. In the BFB 410, the xOLU's (Optical Line Unit) 412,414 support the 1+1 protection scheme, which insures that both BMU's are receiving similar SONET signals. On the other hand, the two BMU's, A 422 and B 424, must receive exactly the same traffic from all line units 430 on the SBI and cellbus to implement the 1+1 protection scheme. The configuration of these buses in the BRX does not preclude this requirement. In some cases, narrowband LU's do not drive SBI-A and SBI-B simultaneously, which precludes 1+1 protection. In these cases 1:1 protection can be used.

### Protection Switching

Upon a failure detection (at the board/equipment level or at the SONET/facility level), a switchover operation will take place in cooperation with the Litespan CC. The failure is declared by BMU-B, which is the master, upon determining:
- Loss of signal (LOS) on the Receive side of BMU-A
- Loss of frame (LOF) on the Receive side of BMU-A
- The quality of the SONET signal in terms of Bit Error Rate (BER) is better in BMU-B compared to in BMU-A.
- A protection switching indication is sent in the SONET overhead from the network side, i.e. BFB.
- Non-SONET-related defects in the active BMU, such as timing failure, or persistence of processor reset

For a single fiber BMU, the optical signal reflected from the cut end may give a false indication to both the active BMU and quad optical line unit (QOLU) that it is a valid SONET signal. To counter this, a non-standard scheme may be adopted by altering a field in the SONET overhead, specifically the byte C2. Predefined patterns are sent in such a field to differentiate the type of fiber; i.e. single vs. dual, on the far-end side. The QOLU and BMU swap different patterns, so any reflected signal will not match what is supposed to be (*i.e.,* expected to be ) received from the other end.

### Failover Methods

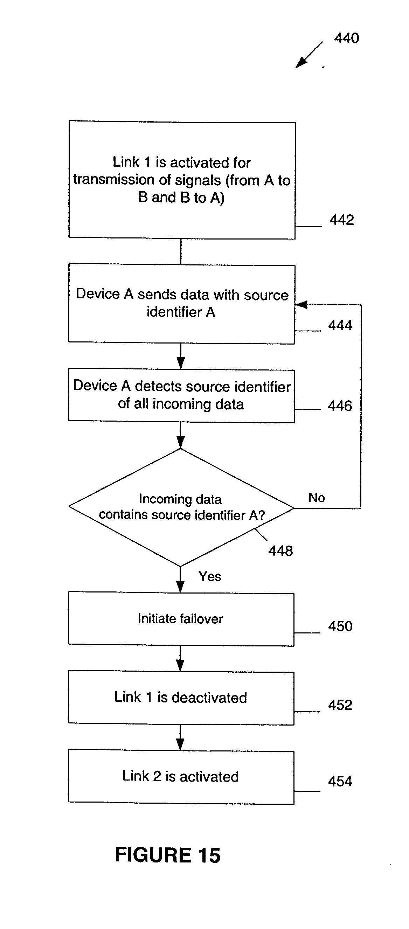

An embodiment of the method utilized by the invention to recognize a failover situation and initiate failover protection is shown in the flow chart of **Figure 15.** As illustrated, the system is initialized with a first active optical interface. A second optical interface is initially inactive. The BRX sends data upstream via one of a pair of BMU's, each of which is operably connected to one of the optical interfaces. Data is received downstream from the Central Office Terminal / BFB. Upstream data is coded, or given a first source identifier, by coding the data header with a predetermined byte pattern. Downstream data is similarly coded with a second source identifier in the data header representing the different source of the data. The system continuously checks the header bytes. In normal use a first device sending data with a first source identifier will receive data having a second source identifier, and vice versa. When a failure occurs, perhaps due to a line break, the optical fiber acts as a reflector, and the first device sending data will either receive data having a first source identifier, or will receive corrupted data having a totally different source identifier. In either case, it will not receive the data together with the second source identifier which it expects to receive. This is detected by the system, which detects the failover condition. In response to detecting the failover condition, the first optical interface is made inactive, while the second optical interface is made active. Communication then continues as normal over the second optical interface.

As used herein, a given signal, event or value is "responsive" or "in response to" a predecessor signal, event or value if the predecessor signal, event or value influenced the given signal, event or value. If there is an intervening processing element, step ortime period, the given signal, event orvalue can still be "responsive" to the predecessorsignal, event orvalue. If the intervening processing element or step combines more than one signal, event or value, the signal output of the processing element or step is considered "responsive" to *each* of the signal, event or value inputs. If the given signal, event or value is the same as the predecessor signal, event or value, this is merely a degenerate case in which the given signal, event or value is still considered to be "responsive" to the predecessor signal, event orvalue. "Dependency" of a given signal, event or value upon another signal, event or value is defined similarly.

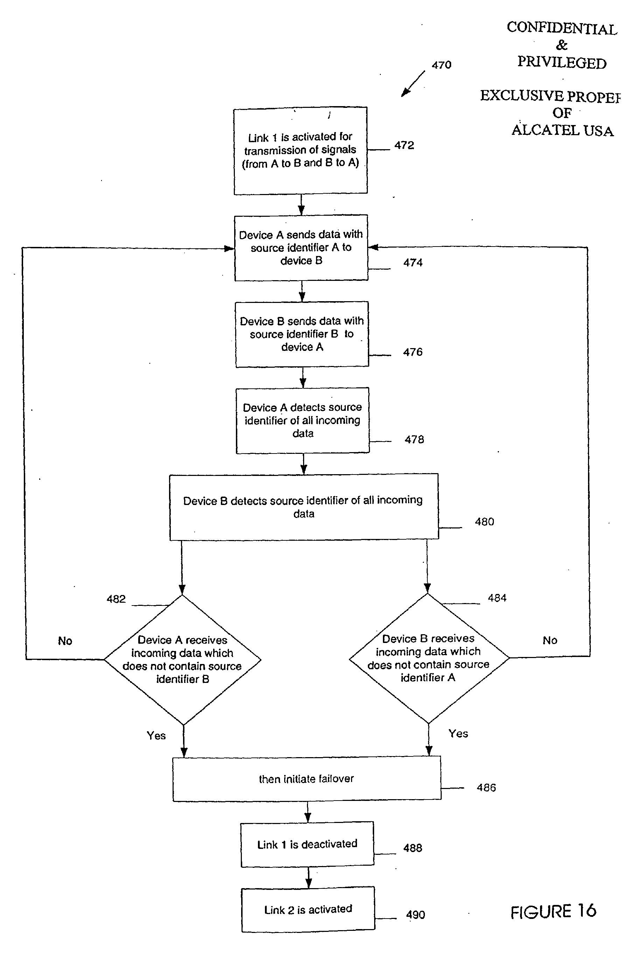

**Figure 16** shows a flowchart of another embodiment of the method used by the invention in initiating a failover protection. In this embodiment of the method, either device may recognize the failover condition and initialize a failover to the second optical interface.

As described earlier with respect to **Figure 5,** an embodiment of the method utilized by the invention to recognize a failover situation and initiate failover protection is shown in the flow chart of **Figure 15.** As illustrated, the system is initialized with a first active optical interface. A second optical interface is initially inactive. The BRX sends data upstream via one of a pair of BMU's, each of which is operably connected to one of the optical interfaces. Data is received downstream from the Central Office Terminal /BFB. Upstream data is coded, or given a first source identifier, by coding the data header with a predetermined byte pattern. Downstream data is similarly coded with a second source identifier in the data header representing the different source of the data. The system continuously checks the header bytes. In normal use a first device sending data with a first source identifier will receive data having a second source identifier, and vice versa. When a failure occurs, perhaps due to a line break, the optical fiber acts as a reflector, and the first device sending data will either receive data having a first source identifier, or will receive corrupted data having a totally different source identifier. In either case, it will not receive the data together with the second source identifier which it expects to receive. This is detected by the system, which detects the failover condition. In response to detecting the failovercondition, the first optical interface is made inactive, while the second optical interface is made active. Communication then continues as normal over the second optical interface. The different with this embodiment of the invention is that either the first or second device will detect the line failure.

The foregoing description of preferred embodiments of the present invention has been provided for the purposes of illustration and description. It is not intended to be exhaustive or to limit the invention to the precise forms disclosed. Obviously, many modifications and variations will be apparent to practitioners skilled in this art. In particular, it will be obvious that the present invention may be employed in areas other than those related to SONET communications, i.e. to other forms of data communication that utilize bidirectional connections. The embodiments were chosen and described in order to best explain the principles of the invention and its practical application, thereby enabling others skilled in the art to understand the invention for various embodiments and with various modifications as are suited to the particular use contemplated. It is intended that the scope of the invention be defined by the following claims and their equivalents.

## Claims

1. A method of detecting a failure in a transmission medium of a data communications network link, comprising:
sending a first set of data, in conjunction with a first source identifier, from a first network access device to a second network access device via a first transmission medium of a data communications link;
receiving at said first network access device, via said first transmission medium of said data communications link, a second set of data in conjunction with a second source identifier; and,
determining from said second source identifier that a transmission failure has occurred in said first transmission medium of said data communications link.

2. The method of claim 1 wherein said step of determining comprises determining that said second source identifier does not equal a pre-specified value.

3. The method of claim 1 wherein said step of determining comprises determining that said second source identifier equals said first source identifier.

4. The method of claim 1 further comprising:
sending a second set of data in conjunction with said second source identifier from a second network access device to said first network access device via a first transmission medium of a data communications link.

5. The method of claim 1 further comprising:
deactivating said first transmission medium of said data communications link for the sending of data and activating a second transmission medium of said data communications link.

6. The method of claim 1 wherein said data is transmitted via said first transmission medium as a plurality of data packets, wherein each of said plurality of data packets comprises a data portion and a header portion.

7. The method of claim 6 wherein said source identifier is carried in a portion of said header of said data packet.

8. The method of claim 7 wherein said source identifier comprises a plurality of byte.

9. The method of claim 8 wherein said data is transmitted as a plurality of SONET packets.

10. The method of claim 9 wherein said source identifier is transmitted as a component of the c2 byte of the header portion of each of said data packets.

11. The method of claim 1 wherein the first network access device comprises a first interface component coupled with said first transmission medium of said data communications link, and a second interface component coupled with a second transmission medium of said data communications link.

12. The method of claim 11 further comprising the steps, following said step of determining of
deactivating said first interface component; and,
activating said second interface component.

13. The method of claim 11 wherein said first and second interface components are optical interconnect devices, and said first and second transmission mediums are optical fibers.

14. A method of detecting a failure in a fiber optic medium of a SONET communications link in a data communications network, comprising:
sending data from a first network access device to a second network access device, in conjunction with a first source identifier, via a first fiber optic medium of the SONET communications link;
receiving at said first network access device, via said first fiber optic medium of said data communications link, a second set of data in conjunction with a second source identifier; and,
determining from said second source identifier that a transmission failure has occurred in said first transmission medium of said data communications link.

15. The method of claim 14 wherein said step of determining comprises determining that said second source identifier is not equal to a pre-specified value.

16. The method of claim 14 wherein said step of determining comprises determining that said second source identifier is equal to said first source identifier.

17. The method of claim 14 further comprising the steps, following said step of determining of:
deactivating said first fiber optic medium; and,
activating said fiber optic medium.

18. A method for providing failover protection in a data communication link having a plurality of transmission media, comprising:
sending data from the first device to the second device, in conjunction with a first source identifier, via a first transmission medium;
detecting a source identifier in all data received by the first device via said first transmission medium; and,
determining when the source identifier of data received by the first device equals the source identifier of data sent by the first device, that a failure has occurred in the first transmission medium and
deactivating said first transmission medium,
activating a second transmission medium.

19. An apparatus for providing failover protection in a bidirectional data communication network, comprising:
a first communications device, for receiving data and transmitting data with an identifying source identifier;
a second communications device for receiving data;
a first communications interface, coupled with said first communications device, for the relay of bidirectional data communication, which is by default active;
a second communications interface, coupled with said first communications device for the relay of bidirectional data communication, which is by default inactive;
a detector coupled with said first communications device for determining the source identifier of incoming data, and determine the source of the data, thus determining that the first communications interface has failed;
a controller coupled with said first communications device for setting the first communications interface as inactive and the second communications interface as active, in response to said detector determining that the first communications interface has failed.

20. The apparatus of claim 19 wherein said step of determining comprises determining that said second source identifier does not equal a pre-specified value.

21. The apparatus of claim 19 wherein said step of determining comprises determining that said source identifier equals a source identifier in data sent by the second communications device.

22. The apparatus of claim 19 wherein said data is transmitted via said first transmission medium as a plurality of data packets, wherein each of said plurality of data packets comprises a data portion and a header portion.

23. The apparatus of claim 22 wherein said source identifier is carried in a portion of said header of said data packet.

24. The apparatus of claim 23 wherein said source identifier comprises a plurality of byte.

25. The apparatus of claim 24 wherein said data is transmitted as a plurality of SONET packets.

26. The apparatus of claim 25 wherein said source identifier is transmitted as a component of the c2 byte of the header portion of each of said data packets.

27. The apparatus of claim 19 wherein the first communications device comprises a first interface component coupled with a first transmission medium of said communications interface, and a second interface component coupled with a second transmission medium of said communications device.

28. The apparatus of claim 27 further comprising the steps, following said step of determining of
deactivating said first interface component; and,
activating said second interface component.

29. The apparatus of claim 27 wherein said first and second interface components are optical interconnect devices, and said first and second transmission mediums are optical fibers.

30. A method for providing failover protection in a bidirectional data communication network, comprising:
activating a first communications link for transfer of data from a first device to a second device;
sending data from the first device to the second device, together with a first source identifier;
sending data from the second device to the first device, togetherwith a second source identifier;
detecting at the first device the source identifier of all data received by the first device;
detecting at the second device the source identifier of all data received by the second device; and, determining, either
when the source identifier of data received by the first device equals the source identifier of data sent by the first device, or
when the source identifier of data received by the second device equals the source identifier of data sent by the second device, that a failure has occurred in the first communications link, and
deactivating the first communications link,
activating a second communications link.
